# EUROPEAN PATENT APPLICATION

(11) **EP 4 694 244 A1**
(43) Date of publication of application: **11.02.2026**
(21) Application number: 23931394.3
(22) Date of filing: 06.04.2023
(51) Int. Cl.: H04W 8/24

(54) **METHOD AND APPARATUS FOR SENDING OR RECEIVING CAPABILITY INFORMATION, AND READABLE STORAGE MEDIUM**

(71) Applicant: Beijing Xiaomi Mobile Software Co., Ltd., Beijing 100085 (CN)
(72) Inventor: LIU, Min, Beijing 100085 (CN); LIU, Zhengxuan, Beijing 100085 (CN)
(74) Representative: Dehns Germany Partnerschaft mbB
(86) International application number: PCT/CN2023/086635
(87) International publication number: WO 2024/207325

(57) **Abstract**

The present disclosure provides a method and apparatus for sending or receiving capability information, and a readable storage medium. The method for sending capability information executed by a terminal comprises: sending first capability information, the first capability information being used for representing processing capability of the terminal based on artificial intelligence (AI) or machine learning (ML). The AI processing performance of a network device and the terminal can be improved.

## Description

### TECHNICAL FIELD

The present disclosure relates to wireless communication technologies, and in particular, to a method and apparatus for sending or receiving capability information, and a readable storage medium.

### BACKGROUND

A terminal may report the capability of the terminal, so that a network device learns different capabilities of different terminals, and the capability may be a capability for a certain processing.

### SUMMARY

The present disclosure provides a method and apparatus for sending or receiving capability information, and a readable storage medium.

According to a first aspect, there is provided a method for sending capability information, the method is performed by a terminal, and the method includes:
sending first capability information, where the first capability information is used to indicate an artificial intelligence (AI) or machine learning (ML)-based processing capability of the terminal.

In some possible embodiments, the first capability information is used to indicate a quantity of AI or ML processing units capable of being simultaneously used by the terminal.

In some possible embodiments, the first capability information comprises at least one of a first value or a second value;
the first value is a quantity of AI or ML processing units capable of being simultaneously used by the terminal on a single carrier; and
the second value is a quantity of AI or ML processing units capable of being simultaneously used by the terminal on a plurality of carriers.

In some possible embodiments, the first capability information corresponds to a first application and a second application; or the first capability information corresponds to a first application; or the first capability information corresponds to a second application.

In some possible embodiments, the first application is an AI-based channel state information (CSI) processing application, and the second application is an AI-based non-CSI processing application.

In some possible embodiments, the first application corresponds to AI-based CSI reporting, and the Al-based CSI reporting comprises at least one of:
AI-based CSI compression reporting, AI-based precoding matrix or vector compression reporting, AI-based CSI time domain prediction reporting, AI-based CSI time domain prediction and precoding matrix or vector compression reporting, AI-based beam time domain prediction resource index reporting, AI-based beam time domain prediction reference signal receiving power (RSRP) reporting, AI-based beam spatial domain prediction reporting, or AI-based beam spatial domain prediction reference signal receiving power (RSRP) reporting;
where a reporting manner of the AI-based CSI reporting comprises at least one of periodic reporting, semi-static reporting, aperiodic reporting, or reporting at any latency level.

In some possible embodiments, the second application corresponds to AI-based positioning reporting, and a reporting manner of the AI-based positioning reporting comprises at least one of periodic reporting, semi-static reporting, or aperiodic reporting.

In some possible embodiments, the method further includes:
receiving indication information sent by a network device, where the indication information is used to indicate at least one of a first application or a second application;
determining, according to the indication information, a quantity of AI or ML processing units simultaneously used on each symbol;
in a case that a quantity of AI or ML processing units simultaneously used on any symbol is greater than or equal to the first value, giving up to process at least one AI-based application on a single carrier corresponding to the first value; and
in a case that the quantity of AI or ML processing units simultaneously used on any symbol is greater than or equal to the second value, giving up to process at least one AI-based application on a plurality of carriers corresponding to the second value;
where the at least one AI-based application is partial applications with a lowest priority among a plurality of AI-based applications, and the AI-based application comprises at least one of a first application or a second application.

According to a second aspect, there is provided a method for sending capability information, the method is performed by a terminal, and the method includes:
sending second capability information, where the second capability information is used to indicate a channel state information (CSI) processing capability of the terminal.

In some possible embodiments, the second capability information is used to indicate a quantity of CSI processing units capable of being simultaneously used by the terminal.

In some possible embodiments, the second capability information comprises at least one of a third value or a fourth value;
the third value is a quantity of CSI processing units capable of being simultaneously used by the terminal on a single carrier; and
the fourth value is a quantity of CSI processing units capable of being simultaneously used by the terminal on a plurality of carriers.

In some possible embodiments, the second capability information corresponds to a first application and a third application, or the second capability information corresponds to a first application; or the second capability information corresponds to a third application.

In some possible embodiments, the first application is an AI-based channel state information (CSI) processing application, and the third application is a non-Al-based CSI processing application.

In some possible embodiments, the first application corresponds to AI-based CSI reporting, and the AI-based CSI reporting comprises at least one of:
AI-based CSI compression reporting, AI-based precoding matrix or vector compression reporting, AI-based CSI time domain prediction reporting, AI-based CSI time domain prediction and precoding matrix or vector compression reporting, AI-based beam time domain prediction resource index reporting, AI-based beam time domain prediction reference signal receiving power (RSRP) reporting, Al-based beam spatial domain prediction reporting, or AI-based beam spatial domain prediction reference signal receiving power (RSRP) reporting;
where a reporting manner of the AI-based CSI reporting comprises at least one of periodic reporting, semi-static reporting, aperiodic reporting, or reporting at any latency level.

In some possible embodiments, the third application corresponds to non-Al-based CSI reporting, and a reporting manner of the non-AI-based CSI reporting comprises at least one of periodic reporting, semi-static reporting, aperiodic reporting, reporting at any latency level, or reporting in any codebook type.

In some possible embodiments, the method further includes:
receiving indication information sent by a network device, where the indication information is used to indicate at least one of a first application or a third application;
determining, according to the indication information, a quantity of CSI processing units simultaneously used on each symbol;
in a case that a quantity of CSI processing units simultaneously used on any symbol is greater than or equal to a third value, giving up to process at least one CSI processing application on a single carrier corresponding to the third value; and
in a case that the quantity of CSI processing units simultaneously used on any symbol is greater than or equal to a fourth value, giving up to process at least one CSI processing application on a plurality of carriers corresponding to the fourth value;
where the at least one CSI processing application is partial applications with a lowest priority among a plurality of CSI processing applications, and the CSI processing application comprises at least one of a first application or a third application.

According to a third aspect, there is provided a method for receiving capability information, the method is performed by a network device, and the method includes:
receiving first capability information, where the first capability information is used to indicate an artificial intelligence (AI) or machine learning (ML)-based processing capability of a terminal.

In some possible embodiments, the method further includes: sending indication information to the terminal, where the indication information is used to indicate at least one of a first application or a second application, the first application is an AI-based channel state information (CSI) processing application, and the second application is an AI-based non-CSI processing application.

According to a fourth aspect, there is provided a method for receiving capability information, the method is performed by a network device, and the method includes:
receiving second capability information, where the second capability information is used to indicate channel state information (CSI) processing capability of a terminal.

In some possible embodiments, the method further includes:
sending indication information to the terminal, where the indication information is used to indicate at least one of a first application or a third application, the first application is an AI-based channel state information (CSI) processing application, and the third application is a non-AI-based CSI processing application.

According to a fifth aspect, there is provided a communication method for a communication system, and the method includes:
sending, by a terminal, first capability information, where the first capability information is used to indicate an artificial intelligence (AI) or machine learning (ML)-based processing capability of the terminal; and
receiving, by a network device, the first capability information.

According to a sixth aspect, there is provided a communication method for a communication system, and the method includes:
sending, by a terminal, second capability information, where the second capability information is used to indicate a channel state information (CSI) processing capability of the terminal; and
receiving, by a network device, the second capability information.

According to a seventh aspect, there is provided a first communication apparatus, and the apparatus includes:
a transceiver module, configured to send first capability information, where the first capability information is used to indicate an artificial intelligence (AI) or machine learning (ML)-based processing capability of the terminal.

According to an eighth aspect, there is provided a second communication apparatus, and the apparatus includes:
a transceiver module, configured to send second capability information, where the second capability information is used to indicate a channel state information (CSI) processing capability of the terminal.

According to a ninth aspect, there is provided a communication system, including a terminal and a network device, where the terminal is configured to implement the communication method according to any one of the first aspect or the second aspect, and the network device is configured to implement the communication method according to any one of the third aspect or the fourth aspect.

According to a tenth aspect, there is provided a storage medium, where the storage medium stores an instruction, where the computer-readable storage medium stores an instruction (or a computer program, a program), and when the instruction is invoked on a computer, the computer is enabled to perform any possible design in the first aspect, the second aspect, the third aspect, or the fourth aspect.

In the present disclosure, the terminal reports the first capability information, so that the network device can learn the AI-based processing capability of the terminal, and the AI-based processing capabilities of different terminals can be used in a reasonable AI processing process, thus improving the AI processing performance of the network device and the terminal. Alternatively, the terminal reports the second capability information, so that the network device can learn the CSI processing capability of the terminal, so that the network device can learn the CSI processing capability of the terminal, and the CSI processing capabilities of different terminals can be used in a reasonable CSI processing process, thus improving the CSI processing performance of the network device and the terminal.

It should be understood that, both the foregoing general description and the following detailed description are exemplary and explanatory only and are not restrictive of the present disclosure.

### BRIEF DESCRIPTION OF THE DRAWINGS

The accompanying drawings described here are used to provide a further understanding of the embodiments of the present disclosure, which constitute a part of the present application. The illustrative embodiments of the embodiments of the present disclosure and the description of the present disclosure are used to explain the embodiments of the present disclosure, and do not constitute an improper limitation to the embodiments of the present disclosure. In the drawings:

The accompanying drawings here, which are incorporated in and constitute a part of the present description, illustrate embodiments consistent with embodiments of the present disclosure and, together with the description, serve to explain the principles of the embodiments of the present disclosure.
FIG. 1 is a schematic architectural diagram of a wireless communication system provided according to an embodiment of the present disclosure;
FIG. 2a to FIG. 2b are schematic interaction diagrams of sending capability information shown according to an example embodiment;
FIG. 3a to FIG. 3d are schematic interaction diagrams of sending capability information shown according to an example embodiment;
FIG. 4a to FIG. 4d are schematic interaction diagrams of sending capability information shown according to an example embodiment;
FIG. 5a to FIG. 5b are structural diagrams of an apparatus for sending capability information shown according to an example embodiment;
FIG. 6a to FIG. 6b are structural diagrams of an apparatus for sending capability information shown according to an example embodiment;

### DETAILED DESCRIPTION

The embodiments of the present disclosure will now be further described with reference to the accompanying drawings and specific implementations.

Example embodiments will be described in detail here, examples of which are illustrated in the accompanying drawings. When the following description refers to the accompanying drawings, unless otherwise indicated, the same numbers in different drawings represent the same or similar elements. The implementations described in the following example embodiments do not represent all implementations consistent with the embodiments of the present disclosure. By contrast, they are merely examples of apparatuses and methods consistent with some aspects of the present disclosure as detailed in the appended claims.

The terms used in the embodiments of the present disclosure are only for the purpose of describing specific embodiments, and are not intended to limit the embodiments of the present disclosure. The singular forms "a" and "the" used in the embodiments of the present disclosure and the appended claims are also intended to include plural forms, unless the context clearly indicates other meanings. It should also be understood that the term "and/or" as used here refers to and includes any or all possible combinations of one or more associated listed items.

It should be understood that although the terms "first", "second", "third", or the like, may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the words "in case" and "if" as used here may be interpreted as "at the time", or "when", or "in response to determining".

Embodiments of the present disclosure are described in detail below, and examples of the embodiments are shown in the accompanying drawings, where the same or similar reference numerals denote the same or similar elements throughout. The embodiments described below with reference to the accompanying drawings are examples and are intended to explain the present disclosure, and should not be construed as limitations of the present disclosure.

Each element, each row, or each column in the table of the embodiments of the present disclosure may be implemented as an independent embodiment. Combinations of any element, any row, or any column may also be implemented as an independent embodiment.

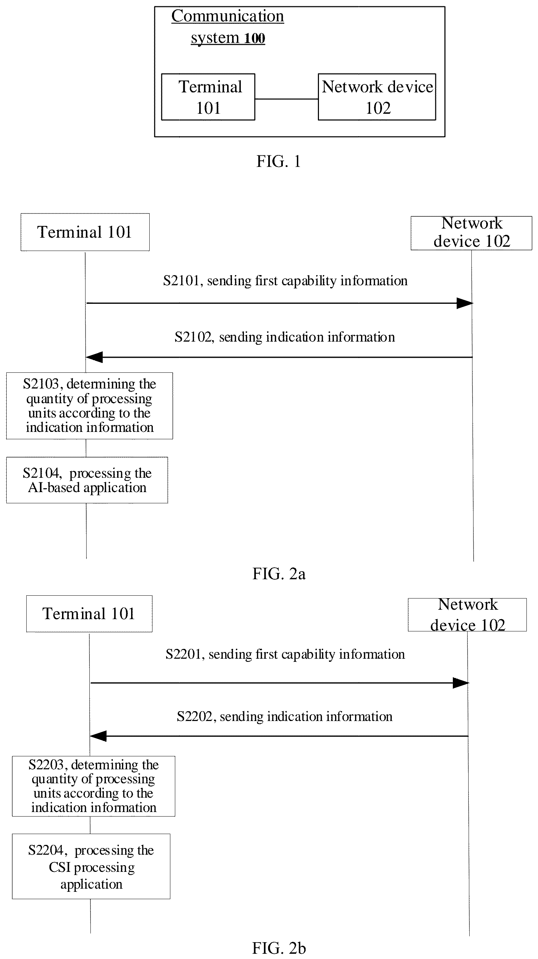

FIG. 1 is a schematic architectural diagram of a communication system shown according to an embodiment of the present disclosure.

As shown in FIG. 1, the communication system 100 includes a terminal 101 and a network device 102.

In some embodiments, the terminal 101 includes, for example, at least one of a mobile phone, a wearable device, an Internet of Things device, a car having a communication function, a smart car, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, or a wireless terminal device in a smart home, but is not limited to this.

In some embodiments, the network device 102 may include at least one of an access network device or a core network device.

In some embodiments, the access network device is, for example, a node or a device that accesses a terminal to a wireless network. The access network device may include at least one of an evolved NodeB (eNB) in a 5G communication system, a next generation eNB (ngeNB), a next generation NodeB (gNB), a NodeB (NB), a home NodeB (HNB), a home evolved NodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in another communication system, or an access node in a wireless fidelity (Wi-Fi) system, but is not limited to this.

In some embodiments, the technical solution of the present disclosure may be applied to an Open RAN architecture. In this case, an interface between access network devices or within an access network device involved in the embodiments of the present disclosure may become an internal interface of an Open RAN, and processes and information interactions between these internal interfaces may be implemented by software or programs.

In some embodiments, the access network device may be composed of a central unit (CU) and a distributed unit (DU), where the CU may also be referred to as a control unit. The protocol layers for the access network device may be divided by using the structure of the CU-DU. Functions of a part of the protocol layers may be placed in the CU for centralized control. Functions of the remaining part or all of the protocol layers may be distributed in the DU, and the DU is controlled by the CU in a centralized manner, which is not limited to this.

In some embodiments, the core network device may be a device, including one or more network elements. Alternatively, the core network device may be a plurality of devices or device groups, and each includes all or part of the one or more network elements. The network element may be virtual, or may be an entity. The core network includes, for example, at least one of an evolved packet core (EPC), a 5G core network (5GCN), or a next generation core (NGC).

It can be understood that the communication system described in the embodiments of the present disclosure is intended to describe the technical solutions of the embodiments of the present disclosure more clearly, does not constitute a limitation on the technical solutions provided in the embodiments of the present disclosure. It can be known by those of ordinary skill in the art that, as the evolution of the system architecture and the appearance of the new service scenario, the technical solutions provided in the embodiments of the present disclosure are also applicable to similar technical problems.

The following embodiments of the present disclosure may be applied to the communication system 100 or partial subjects shown in FIG. 1, which is not limited to this. The subjects shown in FIG. 1 are examples. The communication system may include all or partial subjects in FIG. 1, or may include other subjects other than the subjects in FIG. 1. The quantity and form of each subject are arbitrary. The connection relationship between the subjects is illustrated, and the subjects may not be connected or may be connected. The connection may be in any manner. The connection may be a direct connection or an indirect connection, or may be a wired connection or a wireless connection.

Embodiments of the present disclosure may be applied to Long Term Evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G new radio (NR), Future Radio Access (FRA), New-Radio Access Technology (RAT), New Radio (NR), New Radio Access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) network, a Device-to-Device (D2D) system, a Machine to Machine (M2M) system, an Internet of Things (IoT) system, Vehicle-to-Everything (V2X), a system utilizing other communication methods, a next generation system extended based on the above, etc. In addition, the combination of a plurality of systems (e.g., a combination of LTE or LTE-A and 5G, etc.) may also be applied.

User equipment can calculate a processing capability based on a set condition. For example, the set condition is being in an AI-based scenario. In the AI-based scenario, the user equipment can calculate an AI-based processing capability, which can be counted in units of the AI processing unit.

How to reasonably and effectively report the AI-based processing capability is a problem that needs to be solved.

The user equipment may calculate the channel state information (CSI), where the CSI includes at least one of a precoding matrix indicator (PMI), a channel quality indicator (CQI), or a rank indicator (RI). When calculating the CSI, the user equipment needs to consume a certain processing capability, and the operation capability may be counted in units of the CSI processing unit.

How to reasonably and effectively report the CSI processing capability is a problem that needs to be solved.

FIG. 2a is a schematic interaction diagram of sending capability information shown according to an embodiment of the present disclosure. As shown in FIG. 2a, the method for sending capability information in the embodiments of the present disclosure is used in the communication system 100, and the method includes following steps.

In step S2101, the terminal 101 sends first capability information.

Among them, the first capability information is used to indicate an artificial intelligence (AI)-based processing capability of the user equipment.

In some possible embodiments, sending the first capability information to the network device by the terminal 101 may also be referred to as reporting the first capability information to the network device by the terminal 101.

In some possible embodiments, the network device 102 receives the first capability information.

In some possible embodiments, the first capability information is used to indicate a quantity of AI processing units capable of being simultaneously used by the user equipment.

Optionally, the terminal may send the first capability information by using a related parameter *simultaneous AI-reports,* where the *simultaneous AI-reports* is used to indicate a quantity of reporting based on AI processing capable of being simultaneously supported by the UE.

In some possible embodiments, the *simultaneous AI-reports* is a parameter agreed in at least one protocol.

In some possible embodiments, the first capability information includes at least one of a first value or a second value.

The first value is a quantity of AI processing units (AIPU) capable of being simultaneously used by the user equipment on a single carrier.

Optionally, the first value is sent for each carrier component.

Optionally, the first value may be carried by a parameter, and the parameter carrying the first value is referred to as *simultaneous AI-reportsPerCC* (which may be referred to as the first parameter). The first value is used to indicate a quantity of reporting based on AI processing capable of being simultaneously supported by the UE on a single carrier.

The second value is a quantity of AI processing units capable of being simultaneously used by the user equipment on a plurality of carrier components.

Optionally, the second value is sent for a carrier combination. A frequency band combination includes at least two carrier units.

Optionally, the plurality of carriers includes all carriers applied to the terminal 101.

Optionally, the plurality of carriers includes partial carriers applied to the terminal 101.

For example, the plurality of carriers is a carrier set applied to the terminal 101, and optionally, the quantity of carrier sets is greater than the quantity of all carriers applied to the terminal 101.

Optionally, the second value may be carried by a parameter, and the parameter carrying the second value is referred to as *simultaneous AI-reportsAllCC* (which may be referred to as the second parameter). The second value is used to indicate a quantity of reporting based on AI processing capable of being simultaneously supported by the UE may on all carriers.

In some possible embodiments, the first capability information corresponds to a first application and a second application.

In some possible embodiments, the first capability information corresponds to a first application.

In some possible embodiments, the first capability information corresponds to a second application.

In some possible embodiments, the first application is an AI-based channel state information (CSI) processing application, and the second application is an AI-based non-CSI processing application.

In some possible embodiments, the first application corresponds to AI-based CSI reporting, and the AI-based CSI reporting includes at least one of the following:

AI-based CSI compression reporting, AI-based precoding matrix or vector compression reporting, AI-based CSI time domain prediction reporting, AI-based CSI time domain prediction and precoding matrix or vector compression reporting, AI-based beam time domain prediction resource index reporting, AI-based beam time domain prediction reference signal receiving power (RSRP) reporting, AI-based beam spatial domain prediction reporting, or AI-based beam spatial domain prediction reference signal receiving power (RSRP) reporting.

Optionally, the resource index is a CSI-RS resource index, or a synchronization signal and PBCH block (SSB) index, i.e., an SSB index.

Optionally, the RSRP is L1-RSRP.

Optionally, the reporting manner of the AI-based CSI reporting includes at least one of: periodic reporting, semi-static reporting, aperiodic reporting, or reporting at any latency level. Among them, reporting at any latency level may include reporting at a low latency level and reporting at a high latency level. Definitions of the high latency level and the low latency level may be found in related protocols, details of which are not described here again.

In some possible embodiments, the second application corresponds to AI-based positioning reporting, and the reporting manner of AI-based positioning reporting includes at least one of: periodic reporting, semi-static reporting, or aperiodic reporting.

It should be noted that, the AI-based beam time domain prediction, the AI-based beam spatial domain prediction and the AI-based positioning may be performed by the terminal 101, or may be performed by the network device 102. Only when it is performed by the terminal 101, the AI processing unit of the terminal 101 is occupied. When it is performed by the network device 102, the occupation of the AI processing unit of the terminal 101 is not considered.

In step S2102, the network device 102 sends indication information to the terminal 101.

The indication information is used to indicate an application capable of being used by the terminal 101.

In some possible implementations, the indication information indicates at least one of: a first application or a second application.

In step S2103, the terminal 101 determines the quantity of processing units according to the indication information.

In some possible implementations, the terminal 101 determines, according to the indication information, the quantity of AI or ML processing units simultaneously used on each symbol.

In step S2104, the terminal 101 processes the AI-based application.

In some possible embodiments, in a case that the quantity of AI processing units simultaneously used on any symbol is greater than or equal to the first value, it is given up to process at least one AI-based application on a single carrier corresponding to the first value;
Among them, the AI-based application includes at least one of a first application or a second application. The at least one AI-based application is an application with a lowest priority among a plurality of AI-based applications. The application with the lowest priority among the plurality of AI-based applications may be an application, or may be more than one application.

In an example, the AI-based application in the terminal 101 on one carrier includes N first applications and M second applications, where N is an integer greater than 0, and M is an integer greater than 0. When the quantity of AIPUs occupied by N+M applications exceeds the quantity of AIPUs in the UE capability reporting, the N+M AI-based applications are sorted in a descending order according to the priority. When the priority of one first application and the priority of one second application in the sorting are the same and the lowest, it is given up to process the one first application and the one second application. At this time, the quantity of AIPUs occupied by the N+M-2 applications does not exceed the quantity of AIPUs in the UE capability reporting.

In some possible embodiments, in a case that the quantity of AI processing units simultaneously used on any symbol is greater than or equal to the second value, it is given up to process at least one AI-based application on a plurality of carriers corresponding to the second value.

Among them, the AI-based application includes at least one of a first application or a second application. The at least one AI-based application is an application with a lowest priority among a plurality of AI-based applications. Partial applications with a lowest priority among the plurality of AI-based applications may be an application, or may be more than one application.

In another example, AI-based applications in the terminal 101 on all carriers include K first applications and S second applications, where K is an integer greater than 0, and S is an integer greater than 0. When the quantity of AIPUs occupied by the K+S applications exceeds the quantity of AIPUs in the UE capability reporting, the K+S AI-based applications are sorted in a descending order according to the priority. When the priority of one first application and the priority of one second application in the sorting are the same and lowest, it is given up to process the one first application and the one second application. Atthe quantity of AIPUs occupied by the K+S-2 applications does not exceed the quantity of AIPUs in the UE capability reporting.

In another example, AI-based applications in the terminal 101 on all carriers includes X first applications and Y second applications, where X is an integer greater than 0, and Y is an integer greater than 0. When the quantity of AIPUs occupied by the X+Y applications exceeds the quantity of AIPUs in the UE capability reporting, the X+Y AI-based applications are sorted in a descending order according to the priority. When the priority of one first application in the sorting is the lowest, and the priorities of three second applications are the same and next lowest, it is given up to process the one first application; after it is given up to process the one first application, if the quantity of AIPUs occupied by the X+Y-1 applications still exceeds the quantity of AIPUs in the UE capability reporting, it is continued to give up to process the three second applications; and after that, the quantity of AIPUs occupied by the X+Y-4 applications is less than the quantity of AIPUs in the UE capability reporting.

In some embodiments, at least one of step S2101 to step S2104 may be performed. For example, step S2101 may be implemented as an independent embodiment; step S2101 plus step S2102 may be implemented as an independent embodiment; and step S2101 plus step S2102 plus step S2103 may be implemented as an independent embodiment, which is not limited to this.

In the embodiments of the present disclosure, the terminal 101 sends the first capability information, so that the receiver learns the AI-based processing capability of the user equipment.

In the embodiments of the present disclosure, when the first capability information sent by the terminal corresponds to the first application and/or the second application, the receiver can know the maximum quantity of AI-based reporting simultaneously supported by the terminal. When the reporting based on AI processing that is indicated by the network device exceeds the capability, the UE and the network device determine, based on the consensus, which reporting is reserved, and which reporting is discarded, thus ensuring that the terminal performs corresponding processing within the capability range.

In the embodiments of the present disclosure, AI is used as an example for description. Since both AI and machine learning (ML) are intelligent processing manners, in other embodiments, for the ML-based processing manner, it is similar as that in the embodiments of the present disclosure. For example, the first capability information reported by the terminal is used to indicate the ML-based processing capability of the user equipment, which is not repeated here. The present disclosure is not limited to the two manners of AI and ML, and may also be applied to other manners of intelligent processing.

FIG. 2b is a schematic interaction diagram of sending capability information shown according to an embodiment of the present disclosure. As shown in FIG. 2b, the method for sending capability information involved in the embodiments of the present disclosure is used in the communication system 100, and the method includes following steps.

In step S2201, the terminal 101 sends second capability information.

Among them, the second capability information is used to indicate a channel state information (CSI) processing capability of the user equipment.

In some possible embodiments, sending the second capability information to the network device by the terminal 101 may be referred to as reporting the second capability information to the network device by the terminal 101.

In some possible embodiments, the network device 102 receives the second capability information.

In some possible embodiments, the second capability information is used to indicate a quantity of CSI processing units capable of being simultaneously used by the user equipment.

In a possible embodiment, the terminal may send the second capability information by using *simultaneous CSI-reports* in the CSI-based architecture, where the *simultaneous CSI-reports* is used to indicate a quantity of CSI reporting capable of being simultaneously supported by the UE.

In some possible embodiments, the *simultaneous CSI-reports* is a parameter agreed in at least one protocol.

In some possible embodiments, the second capability information includes at least one of a third value or a fourth value.

The third value is a quantity of CSI processing units (CSIPU) capable of being simultaneously used by the user equipment on a single carrier.

Optionally, the third value is sent for each carrier component.

Optionally, the third value may be carried by a parameter, and the parameter carrying the third value is referred to as *simultaneous CSI-reports PerCC* (which may be referred to as the third parameter). The third value is used to indicate a quantity of CSI processing reporting capable of being simultaneously supported by the UE on a single carrier.

The fourth value is a quantity of CSI processing units capable of being simultaneously used by the user equipment on a plurality of carrier components.

Optionally, the fourth value is sent for a carrier combination. A frequency band combination includes at least two carrier units.

Optionally, the plurality of carriers is all carriers applied to the terminal 101.

Optionally, the plurality of carriers is partial carriers applied to the terminal 101.

For example, the plurality of carriers is a carrier set applied to the terminal 101, and the quantity of the carrier sets is less than the quantity of all carriers applied to the terminal 101.

Optionally, the fourth value may be carried by a parameter, and the parameter carrying the fourth value is referred to as *simultaneous CSI-reportsAllCC* (which may be referred to as the fourth parameter). The fourth value is used to indicate a quantity of CSI processing reporting capable of being simultaneously supported by the UE on all carriers.

In some possible embodiments, the second capability information corresponds to a first application and a third application.

In some possible embodiments, the second capability information corresponds to a first application.

In some possible embodiments, the second capability information corresponds to a third application.

In some possible embodiments, the first application is an AI-based channel state information (CSI) processing application, and the third application is a non-Al-based CSI processing application.

For example, the first application includes at least one of the following:
an application for processing AI-based CSI compression, an application for processing AI-based CSI time domain prediction, an application for processing AI-based beam time domain prediction, or an application for processing AI-based beam spatial domain prediction.

For another example, the third application includes at least one of the following.

In some possible embodiments, the first application corresponds to AI-based CSI reporting, and the AI-based CSI reporting includes at least one of the following:
AI-based CSI compression reporting, AI-based precoding matrix or vector compression reporting, AI-based CSI time domain prediction reporting, AI-based CSI time domain prediction and precoding matrix or vector compression reporting, AI-based beam time domain prediction resource index reporting, AI-based beam time domain prediction reference signal receiving power (RSRP) reporting, AI-based beam spatial domain prediction reporting, or AI-based beam spatial domain prediction reference signal receiving power (RSRP) reporting;
Optionally, the resource index is a CSI-RS resource index, or a synchronization signal and PBCH block (SSB) index, i.e., an SSB index.

The reporting manner of the AI-based CSI reporting includes at least one of periodic reporting, semi-static reporting, aperiodic reporting, or reporting at any latency level.

In some possible embodiments, the third application corresponds to a non-Al-based CSI reporting, and the reporting manner of non-AI-based CSI reporting includes at least one of periodic reporting, semi-static reporting, aperiodic reporting, reporting at any latency level, or reporting in any codebook type.

In step S2202, the network device 102 sends indication information to the terminal 101.

The indication information is used to indicate an application capable of being used by the terminal 101.

In some possible implementations, the indication information indicates at least one of a first application or a third application.

In step S2203, the terminal 101 determines the quantity of processing units according to the indication information.

In some possible implementations, the terminal 101 determines, according to the indication information, the quantity of CSI processing units simultaneously used on each symbol.

In step S2204, the terminal 101 processes the CSI processing application.

In some possible embodiments, in a case that the quantity of CSI processing units simultaneously used on any symbol is greater than or equal to the third value, it is given up to process at least one CSI processing application on a single carrier corresponding to the third value.

Among them, the CSI processing application includes at least one of a first application or a third application, and the at least one CSI processing application is an application with a lowest priority among a plurality of CSI processing applications. The application with the lowest priority among the plurality of CSI processing applications may be an application, or may be more than one application.

For example, the CSI processing application in the terminal 101 on one carrier includes N first applications and M third applications, where N is an integer greater than 0, and M is an integer greater than 0. When the quantity of CSIPUs occupied by the N+M applications exceeds the quantity of CSIPUs in the UE capability reporting, the N+M CSI processing applications are sorted in a descending order according to the priority. When the priority of one first application and the priority of one third application in the sorting are the same and the lowest, it is given up to process the one first application and the one third application. At this time, the quantity of CSIPUs occupied by the N+M-2 applications does not exceed the quantity of CSIPUs in the UE capability reporting.

In some possible embodiments, in a case that the quantity of CSI processing units simultaneously used on any symbol is greater than or equal to the fourth value, it is given up to process at least one CSI processing application on a plurality of carriers corresponding to the fourth value.

Among them, the CSI processing application includes at least one of a first application or a third application. The at least one CSI processing application is an application with a lowest priority among a plurality of CSI processing applications. Partial applications with the lowest priority among the plurality of CSI processing applications may be an application, or may be more than one application.

For example, CSI processing applications in the terminal 101 on all carriers include K first applications and S third applications, where K is an integer greater than 0, and S is an integer greater than 0. When the quantity of CSIPUs occupied by the K+S applications exceeds the quantity of CSIPUs in the UE capability reporting, the K+S CSI processing applications are sorted in a descending order according to the priority. When the priority of one first application and the priority of one third application are the same and lowest, it is given up to process the one first application and the one third application. At this time, the quantity of CSIPUs occupied by the K+S-2 applications does not exceed the quantity of CSIPUs in the UE capability reporting.

For another example, CSI processing applications in the terminal 101 on all carriers include X first applications and Y third applications, where X is an integer greater than 0, and Y is an integer greater than 0. When the quantity of CSIPUs occupied by the X+Y applications exceeds the quantity of CSIPUs in the UE capability reporting, the X+Y CSI processing applications are sorted in a descending order according to the priority. When the priority of one first applications in the sorting are the lowest, and the priorities of three third applications are the same and next lowest, it is given up to process the one first application; after it is given up to process the one first application, if the quantity of CSIPUs occupied by the X+Y-1 applications still exceeds the quantity of CSIPUs in the UE capability reporting, it is continued to give up to process the three third applications; and after that, the quantity of CSIPUs occupied by the X+Y-4 applications is less than the quantity of CSIPUs in the UE capability reporting.

In some embodiments, at least one of steps S2201 to S2202 may be performed. For example, step S2201 may be implemented as an independent embodiment; step S2201 plus step S2202 may be implemented as an independent embodiment; and step S2201 plus step S2202 plus step S2203 may be implemented as an independent embodiment, which is not limited to this.

In the embodiments of the present disclosure, the terminal 101 sends the second capability information, so that the receiver learns the CSI processing capability of the user equipment.

In the embodiments of the present disclosure, when the second capability information sent by the terminal corresponds to the first application and/or the third application, the receiver can know the maximum quantity of CSI processing reporting simultaneously supported by the terminal. When the CSI processing reporting indicated by the network device exceeds the capability, the UE and the network device determine, based on the consensus, which reporting is reserved, and which reporting is discarded, thus ensuring that the terminal performs corresponding processing within the capability range.

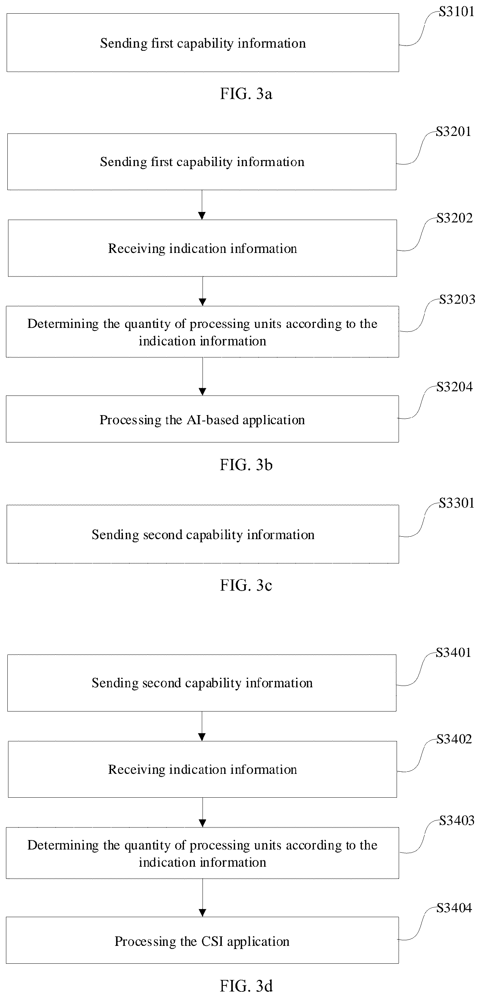

FIG. 3a is a schematic flowchart of a method for sending capability information shown according to an embodiment of the present disclosure. As shown in FIG. 2a, the embodiment of the present disclosure relates to a method for sending capability information, the method is performed by a terminal 101, and the method includes the following step.

In step S3101, first capability information is sent.

For an optional implementation of step S3101, reference may be made to the optional implementation of step S2101 in FIG. 2a and other associated parts in the embodiment involved in FIG. 2a, which is not described here again.

FIG. 3b is a schematic flowchart of a method for sending capability information shown according to an embodiment of the present disclosure. As shown in FIG. 2a, the embodiment of the present disclosure relates to a method for sending capability information, the method is performed by a terminal 101, and the method includes the following steps.

In step S3201, first capability information is sent.

For an optional implementation of step S3201, reference may be made to the optional implementation of step S2101 of FIG. 2a and the other associated parts in the embodiment involved in FIG. 2a, which is not described here again.

In step S3202, indication information is received.

For an optional implementation of step S3202, reference may be made to the optional implementation of step S2102 of FIG. 2a and other associated parts in the embodiment involved in FIG. 2a, which is not described here again.

In step S3203, the quantity of processing units is determined according to the indication information.

For an optional implementation of step S3203, reference may be made to the optional implementation of step S2103 of FIG. 2a and other associated parts in the embodiment involved in FIG. 2a, which is not described here again.

In step S3204, an AI-based application is processed.

For an optional implementation of step S3204, reference may be made to the optional implementation of step S2104 of FIG. 2a and other associated parts in the embodiment involved in FIG. 2a, which is not described here again.

In some embodiments, at least one of step S3201 to step S3204 may be performed. For example, step S3201 may be implemented as an independent embodiment; step S3204 may be implemented as an independent embodiment; step S3201 plus step S3202 may be implemented as an independent embodiment; step S3201 plus step S3204 may be implemented as an independent embodiment; and step S3201 plus step S3202 plus step S3203 may be implemented as an independent embodiment, which is not limited to this.

FIG. 3c is a schematic flowchart of a method for sending capability information shown according to an embodiment of the present disclosure. As shown in FIG. 2b, the embodiment of the present disclosure relates to a method for sending capability information, the method is performed by a terminal 101, and the method includes the following step.

In step S3301, second capability information is sent.

For an optional implementation of step S3301, reference may be made to the optional implementation of step S2201 in FIG. 2b and other associated parts in the embodiment involved in FIG. 2b, which is not described here again.

FIG. 3e is a schematic flowchart of a method for sending capability information shown according to an embodiment of the present disclosure. As shown in FIG. 2b, the embodiment of the present disclosure relates to a method for sending capability information, the method is performed by a terminal 101, and the method includes the following steps.

In step S3401, first capability information is sent.

For an optional implementation of step S3401, reference may be made to the optional implementation of step S2201 in FIG. 2b and other associated parts in the embodiment involved in FIG. 2b, which is not described here again.

In step S3402, indication information is received.

For an optional implementation of step S3402, reference may be made to the optional implementation of step S2202 in FIG. 2b and other associated parts in the embodiment involved in FIG. 2b, which is not described here again.

In step S3403, the quantity of processing units is determined according to the indication information.

For an optional implementation of step S3403, reference may be made to the optional implementation of step S2203 in FIG. 2b and other associated parts in the embodiment involved in FIG. 2b, which is not described here again.

In step S3404, an AI-based application is processed.

For an optional implementation of step S3404, reference may be made to the optional implementation of step S2204 in FIG. 2b and other associated parts in the embodiment involved in FIG. 2b, which is not described here again.

In some embodiments, at least one of step S3401 to step S3404 may be performed. For example, step S3401 may be implemented as an independent embodiment; step S3404 may be implemented as an independent embodiment; step S3401 plus step S3402 may be implemented as an independent embodiment; step S3401plus step S3404 may be implemented as an independent embodiment; and step S3401 plus step S3402 plus step S3403 may be implemented as an independent embodiment, which is not limited to this.

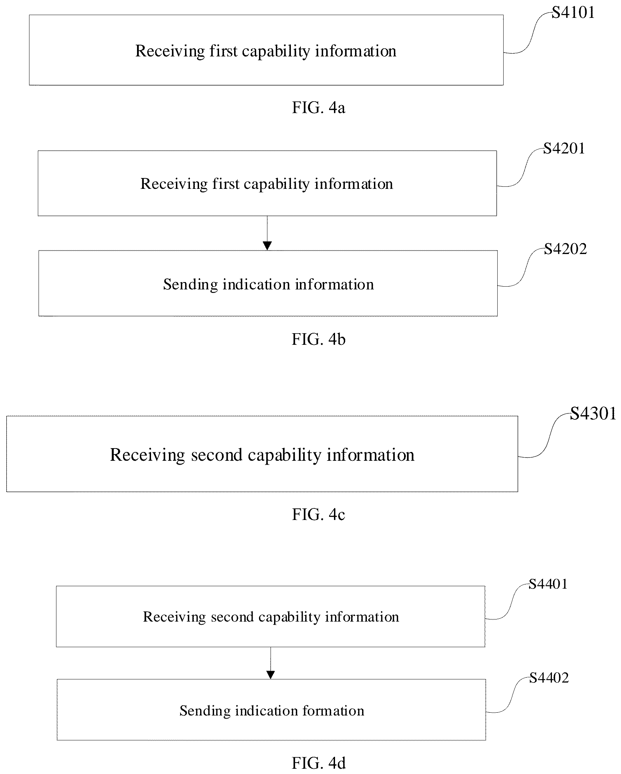

FIG. 4a is a schematic flowchart of a method for sending capability information shown according to an embodiment of the present disclosure. As shown in FIG. 2a, the embodiment of the present disclosure relates to a method for receiving capability information, the method is performed by a network device 102, and the method includes the following step.

In step S4101, first capability information is received.

For an optional implementation of step S4101, reference may be made to the optional implementation of step S4101 in FIG. 2a and other associated parts in the embodiment involved in FIG. 2a, which is not described here again.

FIG. 4b is a schematic flowchart of a method for sending capability information shown according to an embodiment of the present disclosure. As shown in FIG. 2a, the embodiment of the present disclosure relates to a method for receiving capability information, the method is performed by a network device 102, and the method includes the following steps.

In step S4201, first capability information is received.

For an optional implementation of step S4201, reference may be made to the optional implementation of step S2101 in FIG. 2a and other associated parts in the embodiment involved in FIG. 2a, which is not described here again.

In step S4202, indication information is sent.

For an optional implementation of step S4202, reference may be made to the optional implementation of step S2102 in FIG. 2a and other associated parts in the embodiment involved in FIG. 2a, which is not described here again.

FIG. 4c is a schematic flowchart of a method for sending capability information shown according to an embodiment of the present disclosure. As shown in FIG. 2b, the embodiment of the present disclosure relates to a method for receiving capability information, the method is performed by a network device 102, and the method includes the following step.

In step S4301, second capability information is received.

For an optional implementation of step S4301, reference may be made to the optional implementation of step S2201 in FIG. 2b and other associated parts in the embodiment involved in FIG. 2b, which is not described here again.

FIG. 4d is a schematic flowchart of a method for sending capability information shown according to an embodiment of the present disclosure. As shown in FIG. 2b, the embodiment of the present disclosure relates to a method for receiving capability information, the method is performed by a network device 102, and the method includes the following steps.

In step S440 1, second capability information is received.

For an optional implementation of step S4401, reference may be made to the optional implementation of step S2201 in FIG. 2b and other associated parts in the embodiment involved in FIG. 2b, which is not described here again.

In step S4402, indication information is sent.

For an optional implementation of step S4402, reference may be made to the optional implementation of step S2202 in FIG. 2b and other associated parts in the embodiment involved in FIG. 2b, which is not described here again.

Embodiments of the present disclosure further provide an apparatus for implementing any one of the foregoing methods. For example, there is provided an apparatus, where the apparatus includes units or modules configured to implement steps in any one of the foregoing methods performed by a terminal. For another example, there is further provided another apparatus, where the apparatus includes units or modules configured to implement steps in any one of the foregoing methods performed by a network device (for example, an access network device, a core network function node, a core network device, or the like).

It should be understood that division of units or modules in the foregoing apparatus is merely a division of logical functions, and in actual implementation, all or some of the units or modules may be integrated into one physical entity, or may be physically separated. In addition, the units or modules in the apparatus may be implemented in the form of invoking software by a processor. For example, the apparatus includes a processor, the processor is connected to a memory, the memory stores an instruction, and the processor invokes the instruction stored in the memory to implement any one of the above methods or implement the functions of the units or modules of the foregoing apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and functions of some or all of the units or modules may be implemented by design of hardware circuits, and the foregoing hardware circuits may be understood as one or more processors. For example, in an implementation, the hardware circuit is an application-specific integrated circuit (ASIC), and functions of some or all of the units or modules are implemented by design of a logical relationship between elements within the circuit. For another example, in another implementation, the hardware circuit may be implemented by a programmable logic device (PLD); and taking a field programmable gate array (FPGA) as an example, it may include a large quantity of logic gate circuits, and functions of some or all of the units or modules are implemented by configuring a connection relationship between the logic gate circuits using a configuration file. All units or modules of the foregoing apparatus may be all implemented in a form of invoking software by a processor, or may be all implemented in a form of a hardware circuit, or may be partially implemented in a form of invoking software by a processor with the remaining part being implemented in a form of a hardware circuit.

In the embodiments of the present disclosure, the processor is a circuit with signal processing capability. In an implementation, the processor may be a circuit with an instruction reading and running capability, such as a central processing unit (CPU), a microprocessor, a graphics processing unit (GPU) (which may be understood as a microprocessor), a digital signal processor (DSP), or the like. In another implementation, the processor may implement a certain function by using a logical relationship in a hardware circuit, and the logical relationship in the hardware circuit is fixed or reconfigurable; for example, the processor is an application-specific integrated circuit (ASIC) or a hardware circuit implemented by a programmable logic device (PLD), such as an FPGA. In a reconfigurable hardware circuit, the process in which the processor loads a configuration file to implement a hardware circuit configuration may be understood as a process in which the processor loads an instruction to implement the functions of some or all of the units or modules. In addition, it may also be a hardware circuit designed for artificial intelligence, which may be understood as an ASIC, such as a neural network processing unit (NPU), a tensor processing unit (TPU), a deep learning processing unit (DPU), or the like.

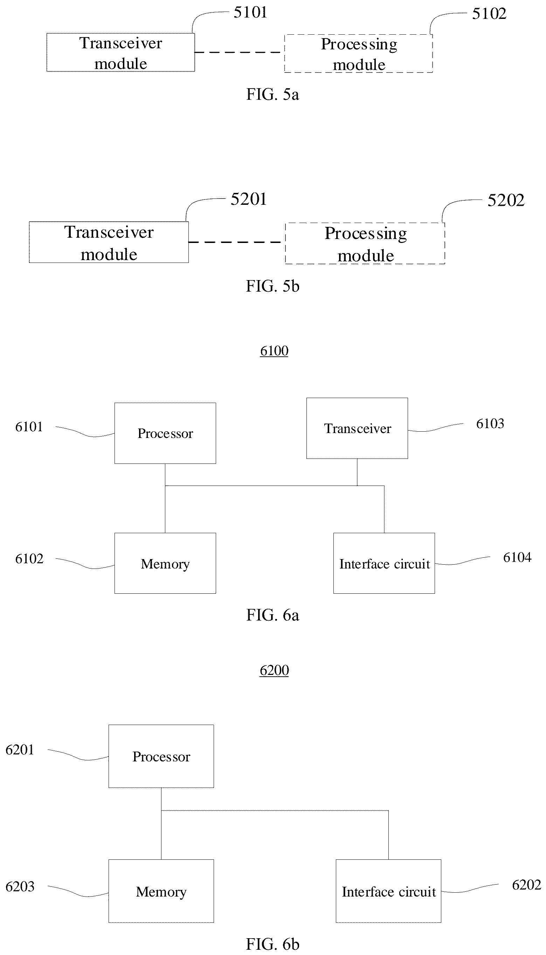

FIG. 5a is a schematic structural diagram of a first communication apparatus provided according to an embodiment of the present disclosure. As shown in FIG. 5a, the first communication apparatus includes a transceiver module 5101. Optionally, the transceiver module 5101 is configured to perform steps related to the communication method performed by the network device 102 in any one of the foregoing methods, and details are not described here again. Optionally, the first communication apparatus 5100 further includes a processing module 5102, and the processing module 5102 is configured to perform the steps related to transceiver-independent processing performed by the terminal 101 in any one of the foregoing methods, and details are not described here again.

FIG. 5b is a schematic structural diagram of a second communication apparatus shown according to an embodiment of the present disclosure. As shown in FIG. 5b, the second communication apparatus includes a transceiver module 5201. Optionally, the transceiver module 5201 is configured to perform the steps related to the communication method performed by the terminal 101 in any one of the foregoing methods, and details are not described here again. Optionally, the second communication apparatus further includes a processing module 5202, and the processing module 5202 is configured to perform steps related to transceiver-independent processing performed by the terminal 101 in any one of the foregoing methods, and details are not described here again.

FIG. 6a is a schematic structural diagram of a communication device 6100 shown according to an embodiment of the present disclosure. The communication device 6100 may be a network device (for example, an access network device, a core network device, or the like); or the communication device 6100 may be a terminal (for example, user equipment); or the communication device 6100 may be a chip, a chip system, or a processor that supports a network device to implement any one of the foregoing methods; or the communication device 6100 may be a chip, a chip system, or a processor that supports a terminal to implement any one of the foregoing methods. The communication device 6100 may be configured to implement the method described in the foregoing method embodiments, and reference for details may be made to the descriptions in the foregoing method embodiments.

As shown in FIG. 6a, the communication device 6100 includes one or more processors 6101. The processor 6101 may be a general-purpose processor or a special-purpose processor, such as a baseband processor or a central processor. The baseband processor may be configured to process a communication protocol and communication data, and the central processing unit may be configured to control a communication apparatus (for example, a base station, a baseband chip, a terminal device, a terminal device chip, a DU, or a CU), execute a program, and process data of a program. The processor 6101 is configured to invoke instructions to cause the communication device 6100 to perform any of the above methods.

In some embodiments, the communication device 6100 further includes one or more memories 6102 for storing instructions. Optionally all or part of the memory 6102 may also be located outside the communication device 6100.

In some embodiments, the communication device 6100 further includes one or more transceivers 6103. When the communication device 6100 includes one or more transceivers 6103, steps of sending and receiving in the above methods are performed by the transceiver 6103, the other steps are performed by the processor 6101.

In some embodiments, the transceiver may include a receiver and a transmitter, which may be separate or integrated together. Optionally, terms such as a transceiver, a transceiver unit, a transceiver machine, and a transceiver circuit may be replaced with each other; terms such as a transmitter, a transmitting unit, a transmitting machine, and a transmitting circuit may be replaced with each other; and terms such as a receiver, a receiving unit, a receiving machine, and a receiving circuit may be replaced with each other.

Optionally, the communication device 6100 further includes one or more interface circuits 6104 connected to the memory 6102. The interface circuit 6104 may be used to receive signals from the memory 6102 or other devices, and may be used to send signals to the memory 6102 or other devices. For example, interface circuit 6104 may read instructions stored in memory 6102 and send the instructions to processor 6101.

The communication device 6100 described in the above embodiment may be a network device or a terminal, but the scope of the communication device 6100 described in the present disclosure is not limited to this, and the structure of the communication device 6100 may not be limited by FIG. 6a. The communication device may be an independent device or may be part of a larger device. For example, the communication device may be: (1) an independent integrated circuit IC, a chip, or a chip system or a subsystem; (2) a set with one or more ICs, optionally, the IC set may further include a storage component configured to store data and a program; (3) an ASIC, such as a modem (Modem); (4) a module that may be embedded in another device; (5) a receiver, a terminal device, an intelligent terminal device, a cellular phone, a wireless device, a handset, a mobile unit, a vehicle-mounted device, a network device, a cloud device, an artificial intelligence device, or the like; (6) another device, etc.

FIG. 6b is a schematic structural diagram of a chip 6200 provided according to an embodiment of the present disclosure. For a case that the communication device 6100 may be a chip or a chip system, reference may be made to the schematic structural diagram of the chip 6200 shown in FIG. 6b, but it is not limited to this. The chip 6200 includes one or more processors 6201 for invoking instructions to cause the chip 6200 to perform any of the above methods.

In some embodiments, the chip 6200 further includes one or more interface circuits 6202 connected to a memory 6203, and the interface circuits 6202 may be used to receive signals from the memory 6203 or other devices and may be used to send signals to the memory 6203 or other devices. For example, the interface circuit 6202 may read the instructions stored in the memory 6203 and send the instructions to the processor 6201. Optionally, terms such as an interface circuit, an interface, a transceiver pin, a transceiver may be replaced with each other.

In some embodiments, the chip 6200 further includes one or more memories 6203 for storing instructions. Optionally all or part of the memory 6203 may be located outside the chip 6200.

The present disclosure further provides a storage medium, where the storage medium stores instructions, and when the above instructions are run on the communication device 6100, the communication device 6100 is enabled to perform any one of the above methods. Optionally, the storage medium is an electronic storage medium. Optionally, the storage medium is a computer-readable storage medium, but is not limited to this. The storage medium may also be a storage medium readable by another apparatus. Optionally, the storage medium may be a non-transitory storage medium, but is not limited to this; and the storage medium may also be a transitory storage medium.

The present disclosure further provides a program product. When the program product is executed by the communication device 6100, the communication device 6100 is caused to perform any one of the above methods. Optionally, the program product is a computer program product.

The present disclosure further provides a computer program. When the computer program runs on a computer, the computer is caused to perform any of the above methods.

### Industrial Applicability

When the terminal sends the first capability information, the receiver may know the maximum quantity of AI-based reporting simultaneously supported by the terminal. When the reporting based on AI processing indicated by the network device exceeds the capability, the UE and the network device determine, based on the consensus, which reporting is reserved and which reporting is discarded, to ensure that the terminal performs corresponding processing in the capability range. When the terminal sends the second capability information, the receiver may know the maximum quantity of CSI processing reporting simultaneously supported by the terminal. When the CSI processing reporting indicated by the network device exceeds the capability, the UE and the network device determine, based on the consensus, which reporting is reserved and which reporting is discarded, to ensure that the terminal performs corresponding processing in the capability range.

## Claims

1. A method for sending capability information, performed by a terminal, and comprising:
sending first capability information, wherein the first capability information is used to indicate an artificial intelligence, AI, or machine learning, ML-based processing capability of the terminal.

2. The method according to claim 1, wherein the first capability information is used to indicate a quantity of AI or ML processing units capable of being simultaneously used by the terminal.

3. The method according to claim 2, wherein the first capability information comprises at least one of a first value or a second value;
the first value is a quantity of AI or ML processing units capable of being simultaneously used by the terminal on a single carrier; and
the second value is a quantity of AI or ML processing units capable of being simultaneously used by the terminal on a plurality of carriers.

4. The method according to claim 2, wherein,
the first capability information corresponds to a first application and a second application; or
the first capability information corresponds to a first application; or
the first capability information corresponds to a second application.

5. The method according to claim 4, wherein the first application is an AI-based channel state information, CSI, processing application, and the second application is an AI-based non-CSI processing application.

6. The method according to claim 4 or 5, wherein the first application corresponds to AI-based CSI reporting, and the AI-based CSI reporting comprises at least one of:
AI-based CSI compression reporting, AI-based precoding matrix or vector compression reporting, AI-based CSI time domain prediction reporting, AI-based CSI time domain prediction and precoding matrix or vector compression reporting, AI-based beam time domain prediction resource index reporting, AI-based beam time domain prediction reference signal receiving power, RSRP, reporting, AI-based beam spatial domain prediction reporting, or AI-based beam spatial domain prediction reference signal receiving power, RSRP, reporting;
wherein a reporting manner of the AI-based CSI reporting comprises at least one of periodic reporting, semi-static reporting, aperiodic reporting, or reporting at any latency level.

7. The method according to any one of claims 4 to 6, wherein the second application corresponds to AI-based positioning reporting, and a reporting manner of the AI-based positioning reporting comprises at least one of periodic reporting, semi-static reporting, or aperiodic reporting.

8. The method according to any one of claims 1 to 7, further comprising:
receiving indication information sent by a network device, wherein the indication information is used to indicate at least one of a first application or a second application;
determining, according to the indication information, a quantity of AI or ML processing units simultaneously used on each symbol;
in a case that a quantity of AI or ML processing units simultaneously used on any symbol is greater than or equal to the first value, giving up to process at least one AI-based application on a single carrier corresponding to the first value; and
in a case that the quantity of AI or ML processing units simultaneously used on any symbol is greater than or equal to the second value, giving up to process at least one Al-based application on a plurality of carriers corresponding to the second value;
wherein the at least one AI-based application is partial applications with a lowest priority among a plurality of AI-based applications, and the AI-based application comprises at least one of a first application or a second application.

9. A method for sending capability information, performed by a terminal, and comprising:
sending second capability information, wherein the second capability information is used to indicate a channel state information, CSI, processing capability of the terminal.

10. The method according to claim 9, wherein the second capability information is used to indicate a quantity of CSI processing units capable of being simultaneously used by the terminal.

11. The method according to claim 10, wherein the second capability information comprises at least one of a third value or a fourth value;
the third value is a quantity of CSI processing units capable of being simultaneously used by the terminal on a single carrier; and
the fourth value is a quantity of CSI processing units capable of being simultaneously used by the terminal on a plurality of carriers.

12. The method according to claim 9, wherein,
the second capability information corresponds to a first application and a third application; or
the second capability information corresponds to a first application; or
the second capability information corresponds to a third application.

13. The method according to claim 11 or 12, wherein the first application is an AI-based channel state information, CSI, processing application, and the third application is a non-AI-based CSI processing application.

14. The method according to claim 11 or 12, wherein the first application corresponds to AI-based CSI reporting, and the AI-based CSI reporting comprises at least one of:
AI-based CSI compression reporting, AI-based precoding matrix or vector compression reporting, AI-based CSI time domain prediction reporting, AI-based CSI time domain prediction and precoding matrix or vector compression reporting, AI-based beam time domain prediction resource index reporting, AI-based beam time domain prediction reference signal receiving power, RSRP, reporting, AI-based beam spatial domain prediction reporting, or AI-based beam spatial domain prediction reference signal receiving power, RSRP, reporting;
wherein a reporting manner of the AI-based CSI reporting comprises at least one of periodic reporting, semi-static reporting, aperiodic reporting, or reporting at any latency level.

15. The method according to any one of claims 12 to 14, wherein,
the third application corresponds to non-AI-based CSI reporting, and a reporting manner of the non-AI-based CSI reporting comprises at least one of periodic reporting, semi-static reporting, aperiodic reporting, reporting at any latency level, or reporting in any codebook type.

16. The method according to any of claims 9 to 15, further comprising:
receiving indication information sent by a network device, wherein the indication information is used to indicate at least one of a first application or a third application;
determining, according to the indication information, a quantity of CSI processing units simultaneously used on each symbol;
in a case that a quantity of CSI processing units simultaneously used on any symbol is greater than or equal to a third value, giving up to process at least one CSI processing application on a single carrier corresponding to the third value; and
in a case that the quantity of CSI processing units simultaneously used on any symbol is greater than or equal to a fourth value, giving up to process at least one CSI processing application on a plurality of carriers corresponding to the fourth value;
wherein the at least one CSI processing application is partial applications with a lowest priority among a plurality of CSI processing applications, and the CSI processing application comprises at least one of a first application or a third application.

17. A method for receiving capability information, performed by a network device, and comprising:
receiving first capability information, wherein the first capability information is used to indicate an artificial intelligence, AI, or machine learning, ML,-based processing capability of a terminal.

18. The method according to claim 17, further comprising:
sending indication information to the terminal, wherein the indication information is used to indicate at least one of a first application or a second application, the first application is an AI-based channel state information, CSI, processing application, and the second application is an AI-based non-CSI processing application.

19. A method for receiving capability information, performed by a network device, and comprising:
receiving second capability information, wherein the second capability information is used to indicate channel state information, CSI, processing capability of a terminal.

20. The method according to claim 19, further comprising:
sending indication information to the terminal, wherein the indication information is used to indicate at least one of a first application or a third application, the first application is an AI-based channel state information, CSI, processing application, and the third application is a non-AI-based CSI processing application.

21. A communication method for a communication system, comprising:
sending, by a terminal, first capability information, wherein the first capability information is used to indicate an artificial intelligence, AI, or machine learning, ML,-based processing capability of the terminal; and
receiving, by a network device, the first capability information.

22. A communication method for a communication system, comprising:
sending, by a terminal, second capability information, wherein the second capability information is used to indicate a channel state information, CSI, processing capability of the terminal; and
receiving, by a network device, the second capability information.

23. A first communication apparatus, comprising:
a transceiver module, configured to send first capability information, wherein the first capability information is used to indicate an artificial intelligence, AI, or machine learning, ML,-based processing capability of the terminal.

24. A second communication apparatus, comprising:
a transceiver module, configured to send second capability information, wherein the second capability information is used to indicate a channel state information, CSI, processing capability of the terminal.

25. A communication system, comprising a terminal and a network device, wherein the terminal is configured to implement the communication method according to any one of claims 1-8, and the network device is configured to implement the communication method according to any one of claims 9-16.

26. A storage medium, wherein the storage medium stores an instruction, and when the instruction runs on a communication device, the communication device is caused to perform the method according to any one of claims 1-8 and 9-16.
